# EUROPEAN PATENT APPLICATION

(11) **EP 4 122 811 A1**
(43) Date of publication of application: **25.01.2023**
(21) Application number: 21187347.6
(22) Date of filing: 23.07.2021
(51) Int. Cl.: B63B 49/00, G05B 13/02, G05B 23/02

(54) **METHOD TO PROVIDE INFORMATION TO ENABLE AN OPTIMIZED CONTROL OF A TECHNICAL SYSTEM**

(71) Applicant: Siemens Energy Global GmbH & Co. KG, 81739 München (DE); Bull SAS, 78340 Les Clayes-sous-Bois (FR)
(72) Inventor: BLENDINGER, Stefan, 90768 Fürth (DE); MÜLLER, Patrick, 21244 Buchholz (DE); KRAWCZAK, Jacek, 04-938 Warszawa (PL)

(57) **Abstract**

The invention is about a method to provide information to enable an optimized control of a technical system, in particular a vessel. First, values are necessary from different sources of the technical system. With the values an actual dataset is provided. The values are transferred into usable data, wherein an actual parameter as a requested performance of the technical system and an actual condition as achievement of a target is necessary. New datasets are stored into a database.

To enable providing useful information to the operator, the database is split into ranges according to categories as section of the parameter. Each range is analysed to define a subset with those datasets having the best conditions within the range.

## Description

The invention is about a method to provide information about the current status of a technical system with hints for deviation of current values from a status representing an optimized operation.

To control a technical system, it is common to capture different actual information about the status of the technical system. Regular a certain feature is requested from the technical system. For example, while using a vehicle during the usage of it a certain power of an engine is requested according to actual needs. It is also possible, that a certain speed is requested. In both cases the operator of the technical system will adjust the operation in such that the desired requested performance of the technical system is reached.

It is usual, that the usage of a technical feature while operating at a requested performance leads to some negative impact. In case of operating an engine of a vehicle fuel or some other energy is necessary. This again leads regular to an unwanted emission, e.g. of CO2 or NOx. This information could also be gathered or calculated from the technical system and therefore presented to the operator.

A challenge is the operation of the technical system at the desired performance while avoiding negative impact as best as possible. An easy but less effective solution is the operation of the technical system based on the knowledge of the operator. In case of a simple technical system, this could be sufficient. But if the technical system comprises some complexity, it is difficult to determine the best operation setup to achieve the desired performance with the lowest impact. In some known use-cases a complex simulation of the technical system is done to predict a performance and the impact dependent on the chosen operational settings. While running the calculation in loops an optimisation could be achieved.

Even it is somehow possible to calculate in advance the system, as more unknow influences affects the outcome of the calculation as less precise is the calculation. The uncertainty that the result of the calculation is correct leads often to an increasing effort for the calculation.

Therefore, it is the task of the current invention to find an alternative solution for providing useful information the operator, but to avoid any more complex calculation without a certainty.

The task is solved by a method to provide technical information according to claim 1. Advantage implementations are given in the sub-claims.

The target of the invention is an optimized control of a technical system. Which kind of technical system it is, that must be controlled is less relevant, wherein the method is in particular useful for the control of a vehicle. As the control of a vessel with the target of an optimized operation is very complex, the method is in particular advantage in this case.

First of all, information about the status of the technical system is required. Therefore, values from different sources of the technical system needs to be collected.

In a second step the values must be prepared for data gathering.

Depending on the source of the value, it is possible, that the captured value doesn't represent the actual status of that source. Therefore, a plausibility analysis is necessary at least for such kind of sources, where incorrect values could occur. For the plausibility analysis a predefined limit and/or a calculated limit is necessary. The limit represents an allowable span between a minimum value and a maximum value. With the plausibility analysis it is guaranteed that all values are within the predefined and/or calculated limit or, if a certain value is not within the limit, this value is identified as invalid.

The kind of values could be very different. Also, the frequency of new values could be very different from one source to another source. Here, it is the task to group all values so a further analyse of a current status of the technical system is possible. Therefore, the values from the different kind of sources are transferred into usable data. Each datum of the set of data is representing at least one value from at least one source.

Necessary for any further evaluation and usage of the data according to the inventive method is a determining parameter. This parameter represents a requested performance of the technical system. It is assumed that when controlling the technical system, the requested performance of the technical system is a target for all operational settings. Therefore, it is necessary to determine the actual performance. Here, it is in particular advantageous if one datum represents the actual performance.

To enable an evaluation of the technical system it is further necessary to have knowledge about a certain condition. This condition represents a measure of achievement of a technical target. The condition could be a value on a scale between a minimum and a maximum or a percentage for the attainment. Here, the minimum value or lowest percentage or the maximum value or highest percentage could be the goal for the achievement of the technical target.

Analogous to the determination of the actual parameter it is necessary to determine an actual condition. This actual condition is advantageously also captured as one datum within the set of data.

It is obvious, that the steps
- plausibility analysis of the values,
- transfer of the values into data,
- determination of the actual parameter and
- determination of the actual condition
could be done in different order or simultaneously.

With those data an actual dataset is generated. The determination of the data and the generation of the dataset could be done at a certain point of time and/or in a certain period.

To enable further evaluation, the actual dataset is added to a database. These database enables with a sufficient number of datasets a further evaluation of the previous operation and status of the technical system.

Therefore, in a first evaluation step the database is analysed in respect to the relevant parameter. This enables the determination of categories, wherein each category is a section of the parameter between the minimum and the maximum.

For example, if the parameter is a value between 0 and 180 and most of the datasets have a parameter which is between 80 and 150 the categories could be defined as shown in the following table:

**Table 1: Exemplary definition of categories**

| Category | from | up to |
|---|---|---|
| 1. | 0 | 50 |
| 2. | 50 | 80 |
| 3. | 80 | 100 |
| 4. | 100 | 110 |
| 5. | 110 | 120 |
| 6. | 120 | 125 |
| 7. | 125 | 130 |
| 8. | 130 | 140 |
| 9. | 140 | 155 |
| 10. | 155 | 180 |

As simple alternative it is also possible to use predefined categories.

As a next step the database is divided into a number of ranges according to the definition of the categories. As result each range comprises all datasets with a parameter with falls into the respective category.

In a third evaluation step for each of the ranges a subset is determined. Each subset is therefore also representing a certain category and a collection of datasets. For further meaningful usage of the database those datasets are of interest, which have a condition close to the desired target, and wherein those datasets are of no further interest, if the condition is far away from the desired target. Therefore, for each of the ranges the datasets of it are analysed in respect to the condition. Those datasets having the best conditions comprising to other datasets of the respective range are then selected for the respective subset.

For example, if the condition is a percentage of the achievement of a target with 100% as best possible operation condition the following table shows exemplary the selection of datasets of a range for usage in a respective subset:

**Table 2: Exemplary determination of a subset**

| Dataset | Range | Parameter | Condition | Category / Subset |
|---|---|---|---|---|
| 10589 | R.4 | 102 | 56 | - |
| 10590 | R.4 | 105 | 53 | - |
| 10591 | R.4 | 101 | 72 | S.4 |
| 10592 | R.4 | 109 | 32 | - |
| 10593 | R.4 | 107 | 68 | - |
| 10594 | R.4 | 106 | 45 | - |
| 10595 | R.4 | 105 | 73 | S.4 |
| 10596 | R.4 | 107 | 61 | - |
| 10597 | R.4 | 108 | 70 | S.4 |

In this example the Range with the identifier "R.4" represents those datasets where the parameter is classified in a section between 100 and 110 (see table 1). Each of the nine assigned datasets has a specific condition, in this example between 53 as lowest value up to 73 as highest value. To determine the subset, those datasets having the best conditions are chosen, which are the three datasets no. 10591, no. 10595 and no. 10597.

This method enables an advantage analysis of the status of a technical system compared to previous operation modes, where the desired target has been reached best.

To provide the database with an adequate split into the subsequent categories and with a sufficient size of the database with a relevant number of datasets within each of the subsets it is advantageous to operate the technical system for an initial period in different operation modes representing the expected regular use of the technical system.

Depending on the kind of technical system and on the quality of the subsets it could be sufficient to perform the evaluation of the database only once with
- the determination of the categories,
- the splitting of the database into ranges and
- the determination of the subsets.

To improve the quality of the method it is in particular preferred to repeat the evaluation of the database. This could be initiated by different conditions.

In a first approach the new evaluation is done if a predefined number of datasets have been added to the database. In this case the bigger size of the database comprises probably further datasets with a better condition, as defined in the subset before the new evaluation.

It is also possible, that a predefined size for each range seems to be sufficient to determine a useful size of the subset that range. If the number of datasets within this range exceeds the predefined size a new evaluation could be triggered especially with the possibility to redefine the categories.

As a simple solution, the new evaluation could be repeated in a predefined period, e.g. after 1000 hours of usage of the technical system.

In a further simple solution, the new evaluation is done repeating at a predefined time, e.g. at a certain time in the night without regular usage of the technical system.

Especially if the technical system is used unregularly and the evaluation needs some performance it could be advantage to run the new evaluation if the technical system is stopped.

The major advantage is achieved, if the database with its ranges and subsets is used during the operation of the technical system to present information about previous operating states with preferable conditions.

Therefore, it is necessary to collect the values from the different sources of the technical system as described before.

Analog, a determination of an actual dataset is necessary with the steps:
- Again, a plausibility analysis is necessary at least for those values, where it could not be guaranteed that all values are within predefined and/or calculated limit.
- Next, actual data needs to be determined, wherein each datum represents at least one value.
- To enable a meaningful usage of the database with its ranges and subsets further an actual parameter for the current data needs to be determined. Here, the parameter could be on datum of the set of data.
- Also, an actual condition needs to be determined for the current data.
- Those data with the parameter and the condition are grouped as an actual dataset.
- This leads to a dataset, which could be added to a database.

With the determined actual parameter, it is possible to select those subsets of the database, which represents an operational status with about the same parameter but with the best conditions. Therefore, the classification is used. From the number of subsets that actual subset is chosen, where the actual parameter is within the respective classification.

It is obvious, that the actual dataset representing the actual operational condition of the technical system could and should be presented to the operator of the technical system.

The value of the method is visible by providing also information about previous datasets of the identified actual subset. Here, it is necessary to provide information from the actual dataset in combination with the datasets of the actual subset. It must be noted that it is regularly not necessary to present each datum of the dataset with the corresponding data of the subset. It is rather useful to present the most relevant data, which are useful for the operator of the technical system.

The provision of relevant actual data, wherein each of the datum is presented to the operator together with the corresponding data of the datasets within the actual subset enables the identification of necessary actions to improve the condition or gives the operator the confirmation, that the actual setting of the technical system exhibit an advantageous condition.

The values collected from different sources of the technical system could be of different kind. At first the values could represent switching states of the technical system. For example, thus switching states could be the information about engine on or off, or it could count a number of lights switched on.

A second most relevant information are sensor values. For example, this could be the voltage within an electric grid or a torque at a shaft or a speed or a temperature.

As third information leading to values used by the method, boundary conditions could be captured. For example, weather conditions, which are not captures by sensors, could be captured from external sources. As further relevant example, information about the quality of a fuel could be entered by the operator or automatically from an external system.

The different kind of values from different sources have obviously different level of quality. This means, that some values correctly represent the actual situation without the risk of invalid/wrong values. Sensors have tolerances, which could lead to a not correct value. The error could be acceptable, but it is also possible that the error goes beyond an acceptable threshold. Next, it is possible that the sensor itself has a defect or the connection from the sensor to a controller is broken, that no value or a completely wrong value is presented.

Therefore, it is necessary to perform the plausibility analysis at least for those values, where it is not guaranteed that the respective value is correct. To enable the plausibility analysis, it is necessary that a respective limit for the respective value is known. In most cases the limit from a minimum up to a maximum could be predefined in advance. For example, if three lights exist, a value representing that four lights are turned on is obviously wrong.

But in some cases, it is not possible to support with a predefined limit. An example:
- The actual value from a first temperature sensor for the ambient temperature is 15°. The value has increased since hours from 5° coldest.
- The actual value from a second temperature sensor for a dark coated surface is 10°. The value is the same as one hour before.
- The actual value from an external source for the weather condition is "sunny without clouds".
- It is obvious, that the actual value for the surface is not correct.
- Here, for the plausibility analysis a calculated limit for the surface temperature could be determined as: If the ambient temperature is increasing and if it is "sunny" than the actual surface temperature must be higher than the previous surface temperature.
- Consequently, the value for the surface temperature is invalid.

In case that an invalid value is identified by the plausibility analysis, different options to deal or overcome the problem are possible.

The easiest solution if a value is invalid is the marking of the respective datum within the dataset as invalid.

A further easy solution is the usage of a previous not invalid value. This is preferred if it could be expected that the value is constant or that only a small change could occur.

Next, it is possible to take some previous and in particular also one or more following values into account. For example, if a temperature changes from one dataset to the next dataset could not exceed 1K and the previous value is 20° and the actual value is 35° and the following value is 18°, it could be expected, that an event (e.g. direct sun) leads to the wrong value. But here the wrong value could be replaced for example by an average of the previous and following value. In this example the actual value is set as 19°.

Analog, an extrapolation of a number of previous values could also lead to a useful actual value, where it is expected that the error (replaced actual value and true, not known value) is relatively small.

As the values could be of different kind from different kind of sources also with a different sequence, it could be necessary to transfer the actual values into actual data.

In the easiest case an actual datum is an actual value.

Especially, if the sequence of values is higher than the generation of datasets, a number of values are preferably summarized. If a fix number of values are available for each time a datum is determined, a sum of all values could be used. In most cases an average of the values is preferred. It is also possible to use only the minimum value, or the maximum value form the sequence of values from one source.

Next, it could also be advantage to transfer the values from one source or even from different sources into another kind of datum. For example, if the values represent vibrations with a Fourier transformation a certain frequency could be identified and stored into the respective datum of the actual dataset.

As mentioned before, if the value is invalid and if no useful replacement is possible, the respective datum should be marked as invalid (e.g., value zero if zero is regularly not possible).

The frequency with which data is collected can vary depending on the technical system, the rate in which values change, the needs for precise or less precise information, etc.. As result different methods are possible to trigger the recording of data.

If, for example, at least some values from a certain source are necessary to determine the respective datum, then the providing of a dataset with its recording in the database could be triggered, if a predefined number of values from a predefined source are available.

Another case for the recording of actual data could be given if a value or a datum is within a predefined limit. For example, if something happens repeatedly like emptying and filling of a box a certain level within the box could be used as trigger for the recording of the actual data.

It is also possible that for some time no relevant changes occur and nothing needs to be reported. Here, it could be advantage to trigger the recording of a dataset if a value from a predefined source changes above a predefined threshold.

A first easy solution is the recording of the dataset at a specific time, e.g. 3 o'clock and 5 o'clock every day.

A second easy solution is the recording of the dataset in a predefined period, e.g. every minute.

When the database is analysed to split the database into different subsequent categories in respect to a parameter, it is an advantage to choose the number of categories and its boundaries dependent on the available number of datasets. It is obvious that it is advantage to provide more categories, if a high number of datasets falling into those categories are available, and to use less categories with a larger range if less datasets are available.

With the categories a certain parameter is split into sections between a minimum and a maximum value. Here, it must be noted, that a minimum value or a maximum value must not be defined, as for example a first category can be defined to comprise all datasets with a parameter below a first boundary value and the last category can be defined to comprise all datasets with a parameter above a highest boundary.

The parameter represents a desired feature of the technical system. It is expected that the priority for the operation of the technical system is the adherence to a desired target parameter. The operation should respect this target parameter and thereby optimize other features.

Therefore, it is advantage to use a power output, e.g. of an engine or from a powertrain, as parameter to classify and sort the database. Also, a speed, e.g. at the powertrain or of the vehicle, could be used advantageously as parameter.

Next, the condition, representing an achievement of a target, is necessary to use the inventive method. The benefit of the inventive method is visible, if it is not possible to determine the condition by simple calculation depending on operational settings. At complex systems it is sometimes not possible to determine the grounds for the exact level of a condition.

A very useful condition applicable to a variety of technical systems is the efficiency of the technical system. In most cases the main impacts for the efficiency are known. But in complex systems it is often not possible to determine why a certain higher efficiency is given at a certain operational status. Especially here, the process can be used with particular advantage.

Depending on the technical system the efficiency could represent different kind of values. If applicable an advantage condition is the fuel or energy consumption relative to the parameter. A further notable condition is the quantity of at least one environmentally harmful substance relative to the parameter, in particular a low emission.

The number of available datasets within the database could determine the definition of the categories and has an impact to the determination of the subsets to each range.

It is the easiest solution to use the range identically as subset if only a low number of datasets up to a minimum number, e.g. 10 datasets within the respective range, are available.

If more than enough datasets are available to choose those with the best condition, than it is preferred, that a predefined maximum number of datasets having the best conditions are used for the respective subset of a range.

If the number of datasets with a range are more than at least necessary but less than the maximum number it is preferred, that a predefined share of the respective range with the datasets having the best conditions, are used for the respective subset.

Depending on the amount of datasets created and the possibility of the database and the needs it could be advantage to clear the database from those datasets, which are not needed any further. A trigger for the cleaning of the database could be the exceeding of a maximum number of datasets within a range. A further trigger could be the exceeding of datasets in total within the database.

If the database needs to be cleared, then superfluous datasets are removed. In a first approach those datasets could be defined as superfluous if its condition has the lowest value within a range. If a sufficient number of datasets are available, the datasets with the lowest condition will not be used for the definition of the subset.

It is also possible to choose those datasets as superfluous, which are the oldest or exceed a predefined age. This is especially advantage if the technical system exhibits a creeping change with a necessary adaption of an optimized operation with a high condition.

In a third approach it is possible to define those datasets as superfluous even as its condition is falling into those of the subset if all data of the superfluous dataset is in-between two other datasets and that the two other datasets are close to each other. Then no further dataset is necessary to represent different datasets with a best condition.

If the number of different data exceeds the possibility to present the actual data and the data of the actual subset lucidly to the operator it is preferred to prioritize the more relevant data.

Therefore, it is an advantage to determine the deviation between each datum of the actual dataset and the respective data of the subset. Here, those data with a higher deviation are prioritized. This gives the operator the best ability to determine possible measurements to increase the actual condition towards the best conditions as shown in the subset.

It is further an advantage to determine which of the data exhibits a higher influence for the condition. Here, an analysis of the database with a comparison of each datum with the condition should be done to identify those datum, where a change has the highest impact to the condition. While presenting those data with the highest impact to the condition, with any change of the operational settings the relevant data could be monitored carefully, and counteraction could be taken if the wrong changes of the operational settings have been used.

In an extension of the inventive method, it is further preferred to use the datasets of the database for a self-learning process. This enables the proposal of a target dataset for the current requested parameter. If further knowledge about the operational settings is captured within the datasets it is further possible to present a proposal for a target operational setting for the requested parameter.

On the other hand it is further possible to use a self-learning process to identify a correlation between the different data and the condition.

In the following figures a possible usage of the inventive method is briefly sketched.
- Fig. 1: shows a vessel as technical system with different sources for values;
- Fig. 2: describes briefly with a sketch the gathering of data for a database;
- Fig. 3: shows briefly the presentation of an actual datum and the corresponding data of the subset.

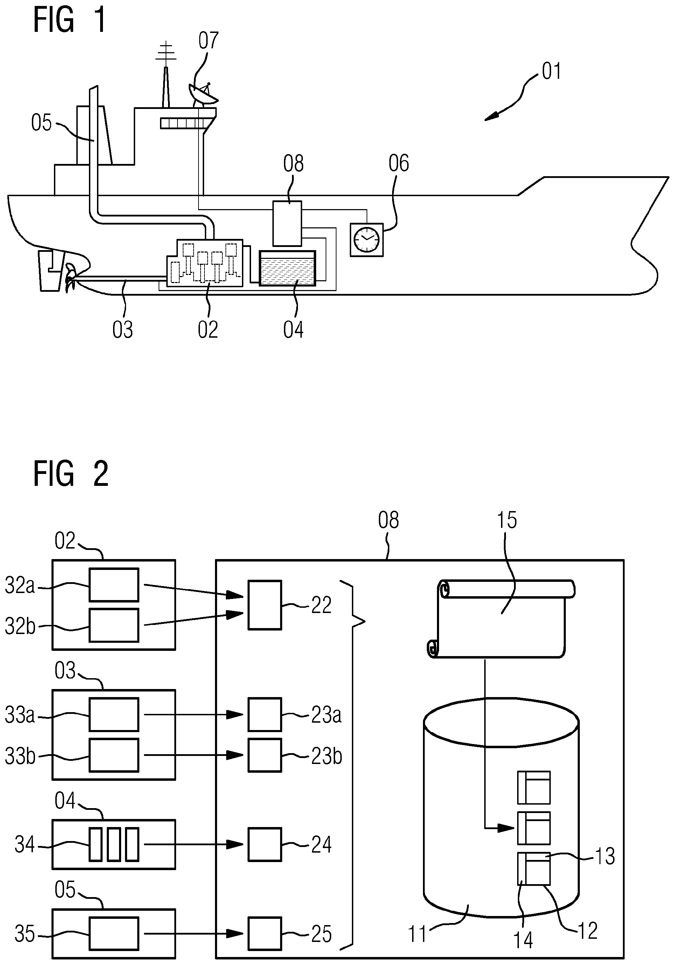

In Figure 1 a vessel 01 is shown. This comprises as a possible source for values, an engine 02, a powertrain 03, a fuel-tank 04 and an exhaust channel 05. Further used in this example is a clock 06 and a position detection unit 07. The method is implemented in a calculation unit 08. It is obvious, that this example shows just an exemplary, small selection of possible sources, where values could be gathered for the method.

The inventive method to generate a database 11 for the technical system, which is in this example the vessel 01, will be explained by the figure 2.

At the engine 02 two different kinds of sensors are installed, a vibration sensor attached to the casing of the engine and a noise sensor placed beside the engine. This leads to a value for the actual vibration 32a and a value for the actual noise 32b.

At the powertrain 03 also two different kinds of sensors are installed, a speed sensor and a torque sensor. This leads to a value for the actual speed 33a and the actual torque 33b of the powertrain 03.

Next, the fuel-tank 04 comprises a sensor for the level within the tank with a value for this actual level 34.

Further, at the exhaust-channel a temperature sensor is attached leading to a value for the actual temperature 35.

All these values are supported in this example to the calculation unit 08. Here, the values 32-35 must be repeatedly transferred into a dataset 15.

Instead of presenting the actual vibration 32a or noise 32b of the engine 02 an engine condition 22 is calculated as one datum of the actual dataset.

As the actual torque 33b and the actual speed 33a are of further interest, both values are used directly as a datum for the actual speed 23a and as a datum for the actual torque 23b.

As a vessel 01 could swing on the water and the determination of the captured level 34 within the fuel-tank 04 varies somehow, over a period a sequence of values for the level 34 are grouped and an average value is transferred into a datum for the actual level 24.

Next, as the temperature of the exhaust-channel is of interest for the condition, this value 35 is also transferred into a datum presenting the actual temperature 25.

The different actual data 22-25 are grouped as an actual dataset 15.

This captured actual dataset 15 is stored into a database 11.

Here, the database 11 is split into different ranges 12. Each range 12 represents a certain category 14. The categories 14 are each a section of a parameter, for example the speed 23a of the powertrain. A part of each range 12 defines a respective subset 13.

In this example any new dataset 15 is assigned to the respective range 12.

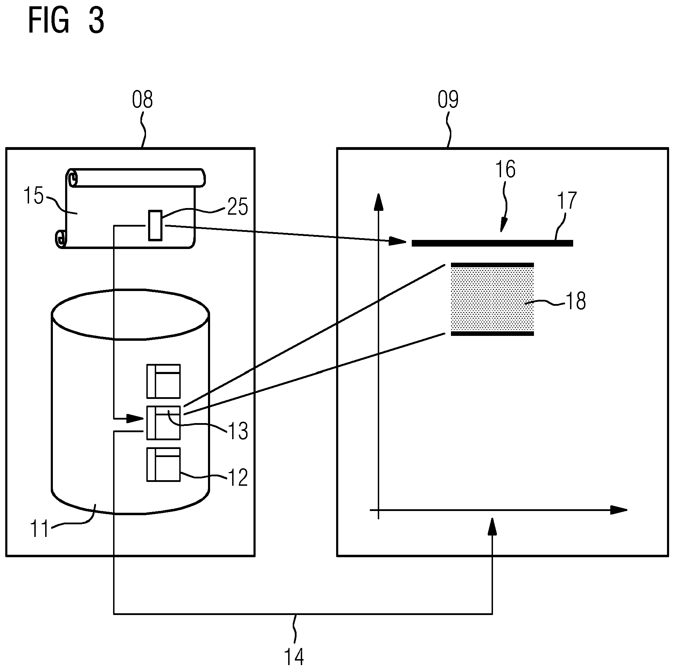

The usability of the inventive method is sketched in figure 3 with the calculation unit 08 comprising the database 11 with its ranges 12 and subsets 13. Further there is the actual dataset 15 representing the current status of the technical system, i.e. the vessel 01 in this example.

The actual dataset 15 has a datum with an actual parameter, e.g. the actual speed 23a. This is assigned to a respective category 14. From the database 11 that actual subset 13 with the same category 14 is chosen.

The actual dataset 15 comprises an actual datum, for example with the actual temperature 25. All respective data of the actual subset 13 with its temperatures are selected.

As result the information is presented to the operator. In this example within a display unit 09 a graphic is shown with the actual temperature 17 at the actual condition and the temperatures 18 from the actual subset 13 representing the best conditions.

Here, in this example it is obvious for the operator, that a reduced temperature at the exhaust channel 05 is required to improve the condition.

### Reference Numerals

- 01: Technical System (Vehicle)
- 02: Engine
- 03: Powertrain
- 04: Fuel-tank
- 05: Exhaust channel
- 06: Clock
- 07: Position detection unit
- 08: Calculation unit
- 09: Display unit
- 11: Database
- 12: Range
- 13: Subset
- 14: Category
- 15: Dataset
- 16: Visualisation
- 17: Temperature at actual condition
- 18: Temperatures at best conditions
- 22: Datum engine condition
- 23a: Datum speed
- 23b: Datum torque
- 24: Datum fuel level
- 25: Datum flue temperature
- 32a: Value vibration
- 32b: Value noise
- 33a: Value speed
- 33b: Value torque
- 34: Value level
- 35: Value temperature

## Claims

1. Method to provide information to enable an optimized control of a technical system (01), in particular a vehicle, in particular a vessel, with the steps:
a) collecting values (32-35) from different sources (02-07) of the technical system (01);
b) providing an actual dataset (15) with
- plausibility analysis to ensure that all values (32-35) are within a predefined and/or calculated limit; and
- determination of actual data (22-25), each datum (22-25) representing at least one value (32-35); thereby
- determination of an actual parameter, wherein the parameter is a requested performance of the technical system (01); thereby
- determination of an actual condition, wherein the condition represents an achievement of a target; and
- generating an actual dataset (15) for a point of time and/or a period as set of the actual data (22-25); and
- adding the actual dataset (15) to a database (11);
c) application of predefined categories (14) or determination of categories (14), each category (14) is a section of the parameter;
d) dividing the database (11) into ranges (12) according to the categories (14);
e) determination of a subset (13) for each of the ranges (12), wherein each subset (13) comprises datasets (15) of the respective range (12) with the best conditions.

2. Method according to claim 1,
wherein to gain a sufficient number of datasets (15) the technical system (01) is operated for an initial period in different operations modes representing the regular use of the technical system (01).

3. Method according to claim 1 or 2,
wherein steps c) and d) and e) are repeated
- after a predefined number of datasets (15) have been added to the database (11); and/or
- after a range (12) comprises a predefined number of datasets (15); and/or
- within a predefined period; and/or
- after a predefined time; and/or
- if the technical system (01) is stopped.

4. Method to provide information to enable an optimized control of a technical system (01), in particular a vehicle, in particular a vessel, with the steps:
a) collecting values (32-35);
b) providing an actual dataset (15);
f) determination of an actual subset (13) from a number of subsets (13) with the same category (14), wherein the subsets (13) are provided by a method according on of the previous claims;
g) providing information about at least some of the data (22-25) from the actual dataset (15) and from the actual subset (13) .

5. Method according to one of the claims 1 to 4,
wherein the values (32-35) include switching states of the technical system (01) and/or sensor values and in particular boundary conditions.

6. Method according to one of the claims 1 to 5,
wherein the plausibility analysis includes the step of determination of a calculated limit assigned to a respective source, based on the values (32-35) from the other sources and/or based on previous and/or following values (32-35).

7. Method according to one of the claims 1 to 6,
wherein a value (32-35) outside the predefined and/or calculated limit is replaced by a previous value (32-35) or an average or an extrapolation of previous and/or following values (32-35); and/or
wherein a datum (22-25) with a respective value outside the predefined and/or calculated limit is marked as invalid.

8. Method according to one of the claims 1 to 7,
wherein a datum (22-25) has
- one value (23a/33a; 23b/33b; 25/35), or
- a summarized value (24) of a number of previous values (34), in particular an average or minimum or maximum value, or
- a calculated substitute value (22) for at least two different kind of values (32a, 32b), or
- a marker for an invalid value.

9. Method according to one of the claims 1 to 8,
wherein a dataset (15) is recorded
- if a predefined number of values (34) from a predefined source (04) are available, or
- if a value (33a) or datum (32a) is within a predefined limit, or
- if a change of a value (32a,32b) or a change of a datum (22), from a predefined source (02) has changed above a predefined threshold, or
- at a specific time, or
- after a predefined period.

10. Method according to one of the claims 1 to 9,
wherein the number of categories (14) and its boundaries are dependent to the available number of datasets (15).

11. Method according to one of the claims 1 to 10,
wherein the parameter is a power output or a speed.

12. Method according to one of the claims 1 to 11,
wherein the condition is an efficiency of the technical system (01),
- in particular a fuel or energy consumption relative to the parameter, or
- in particular a quantity of environmentally harmful substances relative to the parameter.

13. Method according to one of the claims 1 to 12,
wherein a subset (13) comprises
- up to a predefined minimum number all datasets (15) of the respective range (12), and
- a predefined share of the respective range (12) with those datasets (15) having the best conditions,
- but not more than a predefined maximum number of datasets (15) .

14. Method according to one of the claims 1 to 13,
wherein superfluous datasets are deleted from the database (11) if a predefined number of datasets (15) within a range (12) and/or within the database (11) are exceeded, wherein a dataset (15) is superfluous
- if its condition has the lowest value within a range (12); and/or
- if the dataset (15) has reached a predefined age or is the oldest dataset within a range (12); and/or
- if the respective subset (13) comprises a sufficient number of datasets (15) and the data of the superfluous dataset is in-between to other datasets of the subset.

15. Method according to one of the claims 4 to 14,
wherein for each datum (22-25) of the actual dataset (15) the deviation to the respective data of the subset (13) is determined, wherein data with the higher deviation are prioritized.

16. Method according to one of the claims 4 to 15,
wherein the datasets (15) are analysed to determine a correlation between the condition and the data, wherein data with a higher relevance are prioritized.

17. Method according to one of the claims 4 to 15,
wherein the datasets (15) are used as input for a self-learning process used to determine a target dataset and/or a target operational setting and/or the correlation.
